# EUROPEAN PATENT APPLICATION

(11) **EP 2 159 480 A1**
(43) Date of publication of application: **03.03.2010**
(21) Application number: 09168959.6
(22) Date of filing: 28.08.2009
(51) Int. Cl.: F21S 8/12, B60Q 1/18

(54) **Light emitting device for night vision**

(30) Priority: 01.09.2008 GB 0815860
(71) Applicant: Oxley Developments Company Limited, Ulverston Cumbria LA12 9QG (GB)
(72) Inventor: Bushell, Timothy George, Cumbria, LA17 7TR (GB); Cavan, Darren Mark, Cumbria, LA14 3YB (GB)
(74) Representative: Bartle, Robin Jonathan

(57) **Abstract**

A light emitting device (100) comprises a light source (114) mounted in a housing (112), a lens (122) through which light from the source (114) is emitted from the housing (112), and a filter (126) arranged between the light source (114) and the lens (122) to filter the emitted light, the filter (126) being of dichroic type and the lens (122) being asymmetric. The light emitting device (100) may comprise a plurality of light sources (114) and/or the filter (126) may be adapted to transmit perpendicularly incident light and to at least partially reflect obliquely incident light.

## Description

The present invention concerns a light emitting device, particularly (but not necessarily exclusively) an infra red emitter.

The invention has been devised in relation to IR driving lights to assist drivers of ground vehicles wearing night vision goggles ("NVGs") and applications of the invention in this field will be considered below. It should be understood, however, that the invention may be applied in relation to lights operating at different wavelengths (e.g. visible wavelengths) and to lights intended for different purposes. Note that the word "light" as used herein refers to electromagnetic radiation in both the visible and infra red parts of the spectrum.

NVGs typically sense Near Infra-Red ("NIR") wavelengths in order to amplify ambient radiation - particularly moon and star light - at these frequencies at night. An intensified image is created by the NVGs using NTR reflected from a night scene, to enable a user, viewing the image, to see and to carry out activities which would be more difficult or impossible using the unaided eye. Most but not all uses of NVGs are military, with typical uses including piloting aircraft, military foot patrols and night driving.

NVG users do not necessarily rely solely on ambient light. It is well known to use active NIR emitters to provide illumination of the night scene which is visible to NVGs but invisible to the naked eye. In night driving, for example, vehicle-mounted NIR driving lights may be used to illuminate the ground ahead of the vehicle and so enable driving at higher speed than would be possible using ambient light alone. Known driving lights include (a) incandescent lamps with suitable long pass filters to block visible light emission and (b) narrow waveband NIR emitters, especially NIR light emitting diodes ("LEDs").

Both these methods work well at distances of a few yards from the vehicle but have limitations in the way in which they illuminate the night scene which are detrimental when it is desired to increase the illumination at greater distances by increasing the NIR power used to illuminate the scene.

The drawbacks are twofold. Firstly, the increase in NIR required to illuminate the scene further from the vehicle means that more energy also falls on the scene close to the vehicle and this energy, detected by the NVGs, causes the Automatic Gain Control (AGC) within them to reduce the NVG sensitivity, negating the effect of the additional power. Secondly, the increased power which is not incident on the ground is available to be observed by hostile observers at greater range than before the energy was increased.

Rather than simply increasing emitted power, it is desirable to provide a light emitting device which has an improved emission pattern. It is desirable to achieve this using a device which is compact. The device is also desirably simple in its physical construction.

In accordance with a first aspect of the present invention, there is a light emitting device comprising a light source mounted in a housing, a lens through which light from the source is emitted from the housing, and a filter arranged between the light source and the lens to filter the emitted light, the filter being of dichroic type and the lens being asymmetric.

It is particularly preferred that the dichroic filter has a pass band corresponding to the light source's emission frequency. In this way it can be arranged that light from the source which is incident obliquely is reflected rather than transmitted, reducing the angular spread of the emitted light.

Specific embodiments of the present invention will now be described, by way of example only, with reference to the accompanying drawings, in which:-
Figure 1 is a perspective illustration of a know (prior art) NIR light emitting device for use as a driving light;
Figure 2 is a graph of relative emission intensity for the Figure 1 device over a range of angles;
Figure 3 represents the resultant light distribution on a ground plane in front of the light emitting device;
Figure 4 shows the light emitting device being used to illuminate a ground plane;
Figure 5 is a section through a light emitting device embodying the present invention;
Figure 6 is a graph of emission intensity for the Figure 5 device over a range of angles; and
Figure 7 represents the resultant light distribution on a ground plane in front of the light emitting device.

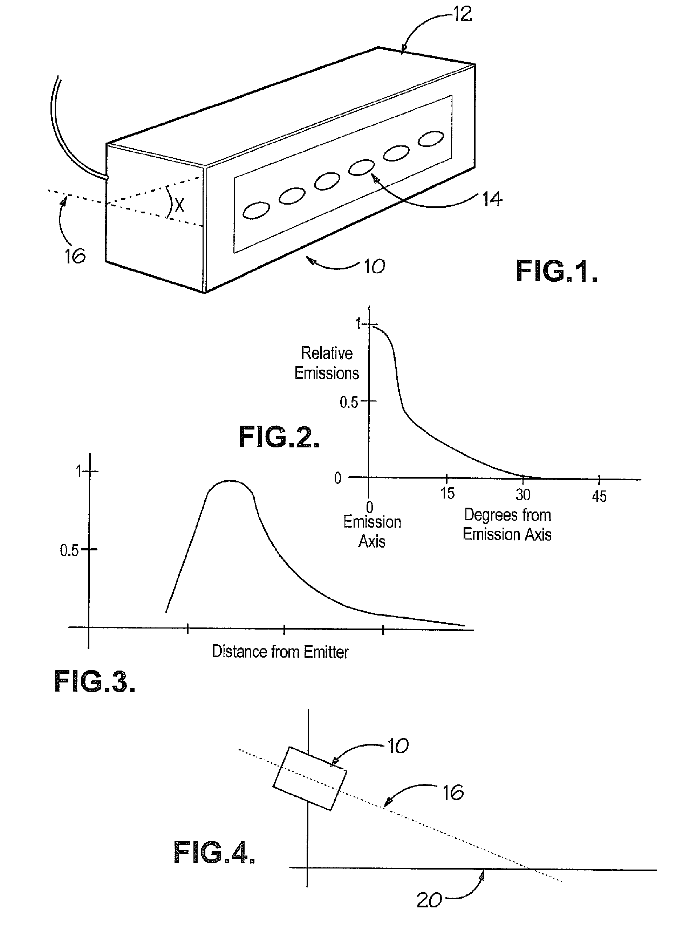

The known NIR light emitting device 10 of Figure 1 has a laterally elongate, cuboidal housing 12 with a row of NIR emitters 14 arranged along its width to emit light along an emission axis 16 (in the following, the emission axis will be defined as the direction along which the emitter's emitted intensity is greatest). The NIR emitters are in the form of LEDs. Figure 2 shows how this light emitting device's output intensity varies away from the emission axis over a range of angles X (marked in Figure 1). Note that although only positive values of X are plotted, the graph is symmetrical - the variation is the same above the emission axis as below it.

If, as represented in Figure 4, a light emitting device 10 of this type is mounted say a metre above a flat level ground plane 20 with its emission axis 16 inclined downwardly (as is typical for a driving light) the distribution of emitted energy over the ground plane has the form seen in Figure 3, peaking close to the emitter. Reducing the angle of inclination of the emission axis toward the ground would move this peak further from the light emitting device, but would also increase unwanted horizontal or upward emission of light, making the vehicle more likely to be seen by distant enemy personnel wearing NVGs. Increasing the emitted power would increase overall illumination, but would have the disadvantages described above.

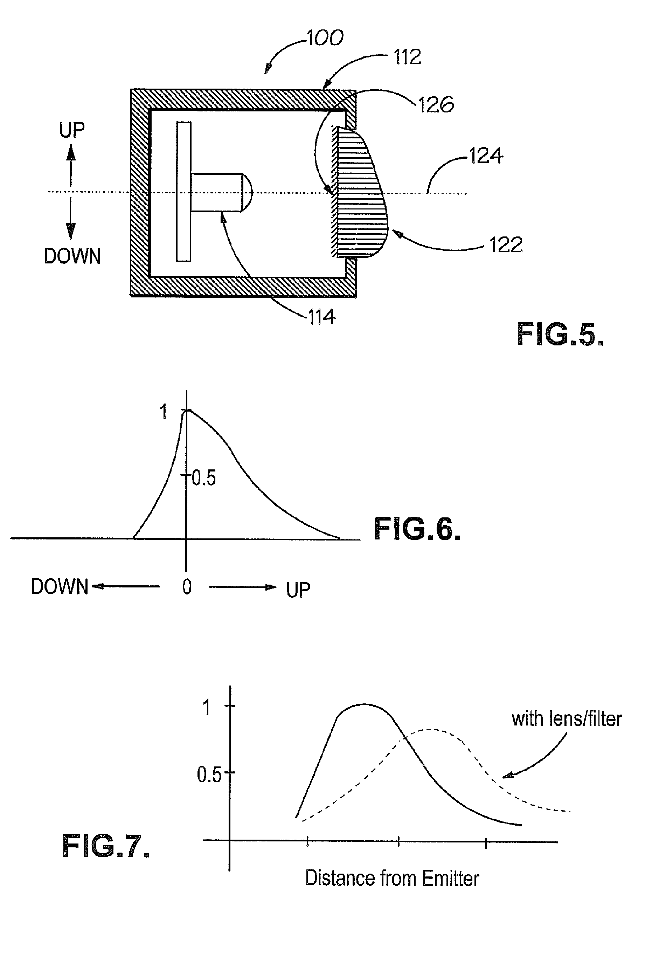

Figure 5 represents an NIR light emitting device 100 embodying the present invention. Its housing 112 is formed similarly to that seen in Fig.1, as an elongate cuboid. Only a single near infra red emitter 114 is seen, but as in the Figure 1 device there is a row of emitters along the length of the housing. The emitters in this embodiment are LEDs. In front of them is an elongate window in the housing at which is mounted a lens 122. The lens is an elongate rectangle in plan, its section along at least most of its length being as seen in the drawing. Note that the lens is asymmetric in section, being bellied towards its bottom. Between the emitters 114 and the lens 122 is a filter 126 of dichroic type (dichroic filters are sometimes referred to as "thin file" filters). Multiple thin layers forming the filter determine, by their depth, the frequencies which are transmitted and those which are reflected. The filter of the present embodiment is a short pass filter.

Note that if light is incident obliquely on the filter then (as compared with light incident perpendicularly) the length of its path through each filter layer is increased. The wavelength passed by the filter thus depends on the angle of incidence of the light. The cut-off wavelength of the short pass filter shifts to a shorter wavelength for off axis (non perpendicularly incident) light which is therefore reflected back into the housing rather than being emitted as it would if the filter were not present. The effect is to aid the focussing effect of the lens by reducing the angular spread of light incident on it.

Note that the LEDs emit in a narrow frequency band which coincides with the transmission band of the filter 126. In the illustrated embodiment the filter 126 is formed upon the rear face of the lens 122.

The effect of the lens 122 and the filter 126 on the pattern of output light is represented in Figure 6. Note that the distribution of energy is no longer symmetrical about the transmission axis and emission off axis, i.e. to the sides or above the vehicle, is reduced. Figure 7 shows the light distribution on a ground plane resulting from use of the light emitting device 100 in the type of arrangement seen in Figure 4. Energy density close to the emitter is reduced and that further away increased as compared with Figure 3 (the Figure 3 plot is seen in phantom for comparison).

## Claims

1. A light emitting device comprising a light source mounted in a housing, a lens through which light from the source is emitted from the housing, and a filter arranged between the light source and the lens to filter the emitted light, the filter being of dichroic type and the lens being asymmetric.

2. A light emitting device as claimed in claim 1 in which the dichroic filter is adapted to transmit light from the source incident on it perpendicularly and to at least partially reflect light from the source which is incident on it obliquely.

3. A light emitting device as claimed in claim 1 in which the light source emits light in a narrow frequency band.

4. A light emitting device as claimed in any preceding claim in which the dichroic filter is a short pass filter whose cut off frequency is such as to cause it to attenuate obliquely incident light at the light source's emission frequencies.

5. A light emitting device as claimed in any preceding claim comprising a row of light emitters formed as light emitting diodes.

6. A light emitting device as claimed in claim 5 in which the lens is elongate.

7. A light emitting device as claimed in any preceding claim which emits in the near infra red frequency range.

8. A light emitting device as claimed in any preceding claim which is a driving light for a ground vehicle.
